# EUROPEAN PATENT APPLICATION

(11) **EP 4 768 869 A1**
(43) Date of publication of application: **01.07.2026**
(21) Application number: 25804573.1
(22) Date of filing: 30.06.2025
(51) Int. Cl.: G01F 23/14

(54) **PNEUMATIC LEVEL GAUGE, LIQUID STORAGE APPARATUS, AND PLANT PROTECTION DEVICE**

(30) Priority: 30.09.2024 CN 202411378335; 30.09.2024 CN 202422413752 U
(71) Applicant: Guangzhou Xaircraft Technology Co., Ltd., Guangzhou, Guangdong 510000 (CN)
(72) Inventor: ZHANG, Liming, Guangzhou, Guangdong 510000 (CN); HUANG, Weibo, Guangzhou, Guangdong 510000 (CN); PENG, Bin, Guangzhou, Guangdong 510000 (CN)
(74) Representative: Monteiro Alves, Inês
(86) International application number: PCT/CN2025/105709
(87) International publication number: WO 2026/066423

(57) **Abstract**

Provided are a barometric liquid level gauge, a liquid storage device, and a plant protection device, including: a barometric sensor, a first waterproof tube communicating with the barometric sensor, and a vent tube whose inner tube diameter is greater than the inner tube diameter of the first waterproof tube. One end of the vent tube communicates with the barometric sensor through the first waterproof tube, and the other end is configured to extend into liquid to sense water pressure. Under normal conditions, the first waterproof tube can communicate with the vent tube and the barometric sensor, enabling the barometric sensor to normally sense the pressure in the vent tube and achieve the liquid level detection function. In addition, the first waterproof tube can also provide waterproofing for the barometric sensor.

## Description

### CROSS-REFERENCE TO RELATED APPLICATIONS

The present invention claims the priority to the Chinese patent application No. 202411378335.7, entitled "BAROMETRIC LIQUID LEVEL GAUGE, LIQUID STORAGE DEVICE AND PLANT PROTECTION DEVICE", filed with the Chinese Patent Office on September 30, 2024, and the Chinese patent application No. 202422413752.2, entitled "BAROMETRIC LIQUID LEVEL GAUGE, LIQUID STORAGE DEVICE AND PLANT PROTECTION DEVICE", filed with the Chinese Patent Office on September 30, 2024, the contents of which are incorporated herein by reference in entirety.

### TECHNICAL FIELD

The present invention relates to the technical field of sustainable agriculture, and particularly relates to a barometric liquid level gauge, a liquid storage device, and a plant protection device.

### BACKGROUND ART

In the field of plant protection, barometric liquid level gauges are generally integrated into automatic pesticide-spraying devices. A main body of the barometric liquid level gauge is generally arranged at a top of a liquid medicine tank. A barometric sensor is internally arranged, and a vent tube connected to the barometric sensor is provided. The vent tube extends to a bottom of the liquid medicine tank. The barometric liquid level gauge can be used for automatically monitoring a height of liquid medicine inside the liquid medicine tank in real time.

Under normal conditions, since the barometric liquid level gauge is located at the top of the liquid medicine tank, liquid medicine in the liquid medicine tank cannot flow backward through the vent tube to contact the barometric liquid level gauge. Moreover, in order to satisfy normal ventilation requirements, the barometric sensor cannot be isolated and sealed from the vent tube. Therefore, in related art, the barometric sensor is generally exposed to the air communicated with the vent tube. This causes a problem that, when the liquid medicine tank accidentally tips over or even becomes inverted, liquid medicine in the liquid medicine tank easily flows backward through the vent tube and contacts the barometric sensor, resulting in water ingress and damage to the barometric sensor. Therefore, on a side of the barometric sensor connected to the vent tube in the barometric liquid level gauge in the related art, there exists a risk of water ingress.

If water enters and damages the barometric sensor, a liquid level inside the liquid medicine tank cannot be accurately detected, which may lead to inaccurate control of a spraying flow rate of the liquid medicine in the agricultural equipment. Some regions may be excessively sprayed, resulting in environmental pollution. Moreover, the agricultural equipment may return before spraying of liquid medicine is completed, leading to energy waste and increased carbon emissions. In addition, the barometric sensor itself belongs to an electronic component. Once damaged by water ingress, it becomes electronic waste, which poses an environmental pollution risk.

### SUMMARY

An objective of the embodiments of the present invention is to provide a barometric liquid level gauge, a liquid storage device, and a plant protection device, which can solve the problem of a risk of water ingress on a side of the barometric sensor connected to the vent tube in the related art.

To achieve the above objective, the present invention adopts the following technical solutions.

In a first aspect, a barometric liquid level gauge is provided, including:
a barometric sensor;
a first waterproof tube communicating with the barometric sensor; and
a vent tube, wherein an inner tube diameter of the vent tube is greater than an inner tube diameter of the first waterproof tube, one end of the vent tube is communicated with the barometric sensor through the first waterproof tube, and the other end is configured to extend into liquid to sense water pressure.

Optionally, the barometric sensor further comprises a connector. A first sensing air chamber is arranged inside the connector. The barometric sensor comprises a first sensitive element for sensing barometric inside the first sensing air chamber. The first waterproof tube is connected to the connector and communicates with the first sensing air chamber.

Optionally, the connector comprises a connector head. The connector head comprises a first connecting post and a second connecting post which are connected. A vent channel is provided inside the connector head and runs through the first connecting post and the second connecting post. The vent channel communicates with the first sensing air chamber. The first waterproof tube is connected to the second connecting post, and the vent tube is sleeved outside the first waterproof tube and connected to the first connecting post.

Optionally, the first waterproof tube is sleeved onto the second connecting post; and/or, the vent tube is sleeved onto the first connecting post.

Optionally, the connector comprises a mounting base and the connector head. The first sensing air chamber is provided in the mounting base. The connector head and the mounting base are of an integrated structure.

Optionally, the connector comprises a mounting base, a flexible tube, and the connector head. The first sensing air chamber is arranged in the mounting base. Two ends of the flexible tube are respectively connected to the mounting base and the connector head, so as to communicate the first sensing air chamber and the vent channel.

Optionally, the connector head is provided with a third connecting post, and the mounting base is provided with a fourth connecting post. Two ends of the flexible tube are respectively sleeved onto the third connecting post and the fourth connecting post.

Optionally, the first waterproof tube utilizes a principle of water surface tension to form a water column inside the first waterproof tube upon water ingress, so as to prevent external water from further invading the barometric sensor through the first waterproof tube.

Optionally, an inner tube diameter of the first waterproof tube is 1.5-3.5 mm.

Optionally, an inner tube diameter of the vent tube is 5-12 mm.

Optionally, the barometric sensor includes a sensor body, and the sensor insertion tube is arranged on one side of the sensor body. The first sensitive element is arranged inside the sensor insertion tube. The connector is provided with a sensing connection hole in communication with the first sensing air chamber. The sensor insertion tube is inserted into the sensing connection hole, such that the first sensitive element can sense the internal barometric of the first sensing air chamber.

Optionally, a sealing ring is arranged in the sensing connection hole. The sensor insertion tube is inserted into the sealing ring.

Optionally, the barometric sensor further comprises a second sensitive element for sensing atmospheric pressure.

Optionally, a shell upper cover is included. The shell upper cover is mounted on the connector and covers the barometric sensor.

Optionally, the barometric liquid level gauge is applied in a liquid medicine tank for plant protection.

In another aspect, a liquid storage device is provided, including a liquid storage tank and the above-mentioned barometric liquid level gauge.

In yet another aspect, a plant protection device is provided, including a carrier, a spraying system, and the above-mentioned liquid storage device. The spraying system and the liquid storage device are mounted on the carrier. The spraying system is configured to pump the liquid medicine into the liquid storage device and atomize and spray it.

The beneficial effects of the present invention are as follows. The present invention provides a barometric liquid level gauge, a liquid storage device, and a plant protection device, wherein the barometric liquid level gauge is provided with a first waterproof tube configured to communicate with the vent tube and the barometric sensor. Under normal conditions, the first waterproof tube can communicate with the vent tube and the barometric sensor, enabling the barometric sensor to normally sense the pressure in the vent tube and achieve the liquid level detection function. In addition, the first waterproof tube can also provide waterproofing for the barometric sensor. This avoids water ingress damage to the barometric sensor that would cause it to become electronic waste, thereby preventing environmental pollution. Since the barometric sensor is less prone to water ingress, the barometric liquid level gauge can accurately detect the liquid level, thereby ensuring the accurate spraying amount of the liquid medicine to prevent environmental pollution caused by excessive spraying. The barometric sensor accurately detects the liquid level in the liquid medicine tank. It can also prevent a situation in which the liquid medicine in the liquid medicine tank has not been completely sprayed but the equipment returns for refilling. This reduces ineffective movement of the plant protection device, avoids energy waste, and decreases carbon emissions.

### BRIEF DESCRIPTION OF DRAWINGS

The present invention will be further described in detail below in conjunction with the drawings and embodiments.
FIG. 1 is a schematic structural diagram of a barometric liquid level gauge according to the embodiment of the present invention;
FIG. 2 is a vertical sectional view of the barometric liquid level gauge shown in FIG. 1;
FIG. 3 is an exploded schematic diagram of the barometric liquid level gauge shown in FIG. 1 in a state where a vent tube is hidden;
FIG. 4 is a vertical sectional view of the barometric liquid level gauge shown in FIG. 1 in a state where the vent tube is hidden;
FIG. 5 is an enlarged view of region A in FIG. 4;
FIG. 6 is an enlarged view of region B in FIG. 4;
FIG. 7 is a schematic structural diagram of a top side view of a shell base according to the embodiment of the present invention;
FIG. 8 is a schematic structural diagram of a bottom side view of a shell base according to the embodiment of the present invention;
FIG. 9 is a schematic structural diagram of a shell base and a second waterproof tube in a connected state according to the embodiment of the present invention;
FIG. 10 is a schematic structural diagram of a shell upper cover according to the embodiment of the present invention;
FIG. 11 is a schematic structural diagram of a barometric liquid level gauge according to another embodiment of the present invention;
FIG. 12 is a vertical sectional view of the barometric liquid level gauge shown in FIG. 11; and
FIG. 13 is a vertical sectional view of a housing of a barometric liquid level gauge according to yet another embodiment of the present invention.

In the figures:
1 - outer shell; 11 - shell base; 111 - supporting boss; 112 - airtight groove; 113 - airtight ring; 1131 - convex rib strip; 114 - tube-clamping member; 1141 - arc-shaped tube-clamping plate; 1142 - clamping block; 12 - shell upper cover; 13 - side surrounding wall; 131 - second surrounding wall plate; 132 - first surrounding wall plate; 1321 - second surrounding wall portion; 1322 - first surrounding wall portion; 1323 - step portion; 1324 - annular groove; 1325 - waterproof ring; 14 - top cover plate; 15 - inner partition plate; 151 - annular flange; 16 - device mounting cavity; 161 - second sensing air chamber; 1611 - sensor mounting region; 1612 - bypass narrow air duct; 17 - venting chamber; 18 - second vent hole; 19 - first vent hole; 2 - connector; 21 - mounting base; 211 - first sensing air chamber; 22 - connector head; 221 - second connecting post; 222 - first connecting post; 223 - vent channel; 23 - flexible tube; 3 - barometric sensor; 31 - sensor body; 32 - sensor insertion tube; 33 - sealing ring; 4 - first waterproof tube; 5 - vent tube; 6 - second waterproof tube; 7 - main control circuit board.

### DETAILED DESCRIPTION OF EMBODIMENTS

In order to make the technical problems solved by the present invention, the technical solutions adopted, and the technical effects achieved clearer, the technical solutions of the embodiments of the present invention are described in further detail below. Obviously, the described embodiments are only a part of the embodiments of the present invention, but not all of the embodiments. Based on the embodiments of the present invention, all other embodiments obtained by those skilled in the art without paying inventive effort shall fall within the protection scope of the present invention.

In the description of the present invention, unless otherwise clearly stipulated and limited, the terms "couple", "connect", and "fix" should be understood in a broad sense. For example, it can be a fixed connection, a detachable connection, or an integral connection; it can be a mechanical connection, an electrical connection; it can be a direct connection, an indirect connection through an intermediary, an internal communication between two components, or the interaction relationship between two components. Those of ordinary skill in the art can understand the meanings of the above terms in the present invention according to specific situations.

In the present invention, unless otherwise explicitly specified and limited, "above" or "below" of a second feature with respect to a first feature may include the case where the second feature is in direct contact with the first feature, and may also include the case where the second feature is not in direct contact with the first feature but is in contact through another feature between them. Moreover, "above", "over", and "on" of the second feature with respect to the first feature include that the second feature is directly above or obliquely above the first feature, or merely indicate that a horizontal height of the second feature is greater than that of the first feature. "Below", "under", and "beneath" of the second feature with respect to the first feature include that the second feature is directly below or obliquely below the first feature, or merely indicate that a horizontal height of the second feature is less than that of the first feature.

In the field of plant protection, barometric liquid level gauges are generally integrated into automatic pesticide-spraying devices. A main body of the barometric liquid level gauge is generally arranged at a top of a liquid medicine tank. A barometric sensor 3 is internally arranged, and a vent tube connected to the barometric sensor 3 is provided. The vent tube extends to a bottom of the liquid medicine tank. The barometric liquid level gauge can be used for automatically monitoring a height of liquid medicine inside the liquid medicine tank in real time.

Under normal conditions, since the barometric liquid level gauge is located at the top of the liquid medicine tank, liquid medicine in the liquid medicine tank cannot flow backward through the vent tube to contact the barometric liquid level gauge. Moreover, in order to satisfy normal ventilation requirements, the barometric sensor 3 cannot be isolated and sealed from the vent tube. Therefore, in related art, the barometric sensor 3 is generally exposed to the air communicated with the vent tube. This causes a problem that, when the liquid medicine tank accidentally tips over or even becomes inverted, liquid medicine in the liquid medicine tank easily flows backward through the vent tube and contacts the barometric sensor 3, resulting in water ingress and damage to the barometric sensor 3. Therefore, on a side of the barometric sensor 3 connected to the vent tube in the barometric liquid level gauge in the related art, there exists a risk of water ingress.

In order to overcome the above technical problems, the present embodiment provides a barometric liquid level gauge, which can satisfy the requirement that the barometric sensor 3 senses gas pressure on a liquid side, and can also provide a reliable waterproof function under emergency conditions so as to provide reliable protection for the barometric sensor 3.

The barometric liquid level gauge of the present embodiment comprises at least the barometric sensor 3, a first waterproof tube 4, and a vent tube 5. The first waterproof tube 4 communicates with the barometric sensor 3. An inner tube diameter of the vent tube 5 is greater than an inner tube diameter of the first waterproof tube 4. One end of the vent tube 5 communicates with the barometric sensor 3 through the first waterproof tube 4, and the other end is configured to extend into liquid to sense water pressure.

The barometric liquid level gauge of the present embodiment utilizes a barometric detection principle to achieve a function of detecting a liquid level height. In a specific application, an end of the vent tube 5 away from the first waterproof tube 4 extends into the liquid. The barometric sensor 3, the first waterproof tube 4, the vent tube 5, and the liquid enclose a sealed cavity. The liquid applies pressure to air in the cavity. The barometric sensor 3 detects a gas pressure of the air. The higher the liquid level, the greater the pressure applied by the liquid to the air in the cavity, and the higher the pressure value detected by the barometric sensor 3. That is, the pressure value detected by the barometric sensor 3 can be converted into the liquid level height.

In one embodiment, a waterproof principle of the first waterproof tube 4 is similar to that of a capillary tube. When external liquid enters the first waterproof tube 4 from an end of the first waterproof tube 4 far from the barometric sensor 3, the liquid easily forms a water column inside the first waterproof tube 4 under the action of liquid tension. The water column can isolate a space between the barometric sensor 3 and the first waterproof tube 4 from the outside, which is equivalent to forming a seal to prevent air between the barometric sensor 3 and the first waterproof tube 4 from being discharged. When pressure of the external liquid balances with barometric inside the first waterproof tube 4, the liquid cannot continue to enter, thereby achieving a waterproof purpose for the barometric sensor 3.

It should be noted that, in a normal usage state, an end of the first waterproof tube 4 communicating with the vent tube 5 does not extend into the liquid, because the waterproof principle of the first waterproof tube 4 is realized by using self-tension of the liquid. When the liquid enters the first waterproof tube 4, it easily forms a water column inside the first waterproof tube 4. The water column is difficult to retreat freely under its own gravity, and changing a height of the water column is also difficult. Therefore, the barometric inside the first waterproof tube 4 cannot accurately reflect pressure applied by the liquid; that is, the pressure value sensed by the barometric sensor 3 cannot sensitively reflect the liquid level height, which directly causes a failure problem of the liquid level gauge. Therefore, the present invention provides the vent tube 5 as an intermediate bridge connecting the first waterproof tube 4 and the liquid, which plays a vital role. The inner tube diameter of the vent tube 5 is relatively large, and under the action of liquid self-tension, a water column is not easily formed inside the vent tube 5. When the liquid level changes, a liquid level height inside the vent tube 5 also sensitively changes accordingly. Therefore, barometric inside the vent tube 5 can accurately reflect liquid pressure. The first waterproof tube 4 communicates with the vent tube 5, so barometric inside the first waterproof tube 4 can also accurately reflect liquid pressure. In summary, the present embodiment provides the first waterproof tube 4 to allow ventilation and waterproofing for the barometric sensor 3, and also provides the vent tube 5 to extend into the liquid, so that in a normal usage state, the first waterproof tube 4 does not contact water at any time, thereby avoiding a problem that water entering the first waterproof tube 4 affects accuracy of liquid level detection.

In a specific application, according to usage requirements, the barometric sensor 3 used in the barometric liquid level gauge can be an absolute barometric sensor 3 or a relative barometric sensor 3. When the absolute barometric sensor 3 is adopted, only one sensitive element is arranged thereon. The sensitive element is capable of sensing barometric inside the first waterproof tube 4. When the relative barometric sensor 3 is adopted, two sensitive elements are arranged. One sensitive element is capable of sensing barometric inside the first waterproof tube 4, and the other sensitive element is capable of sensing atmospheric pressure. A pressure difference detected by the two sensitive elements can accurately reflect an actual liquid level height, thereby avoiding a problem where liquid level detection is affected by atmospheric pressure change.

In summary, based on the barometric liquid level gauge of the present embodiment, in the barometric liquid level gauge, the first waterproof tube 4 is arranged to communicate with the vent tube 5 and the barometric sensor 3. Under normal conditions, the vent tube 5 and the barometric sensor 3 can be communicated through the first waterproof tube 4, so that the barometric sensor 3 can normally sense barometric of the vent tube 5, thereby achieving a function of liquid level detection. A waterproof principle of the first waterproof tube 4 is similar to that of a capillary tube. When external liquid enters the barometric sensor 3 from one end of the first waterproof tube 4 away from the barometric sensor 3, the liquid easily forms a water column inside the first waterproof tube 4 under the action of liquid tension. The water column can isolate a space between the barometric sensor 3 and the first waterproof tube 4 from the outside, which is equivalent to forming a seal to prevent air between the barometric sensor 3 and the first waterproof tube 4 from being discharged. When pressure of the external liquid balances with barometric inside the first waterproof tube 4, the liquid cannot continue to enter, thereby achieving a waterproof purpose for the barometric sensor 3.

The barometric liquid level gauge of the present embodiment can be applied in various scenarios requiring liquid level detection, which can include but are not limited to industrial facilities such as reactors and filtration tanks; can include but are not limited to household appliances such as washing machines and dishwashers; and can include but are not limited to plant protection device such as agricultural liquid medicine tanks and water tanks.

The barometric liquid level gauge of the present embodiment has more obvious advantages when applied in a scenario of agricultural liquid medicine tanks. The liquid medicine tank needs to continuously move for operation in farmlands, so it is generally mounted on unmanned vehicles, drones, or manually driven vehicles, or directly carried and moved by a human. That is, the liquid medicine tank has a structure that is easy to move and transfer. During use, it is easy for the liquid medicine tank to tip over, thereby causing a problem where the liquid medicine flows and pollutes the barometric sensor 3. In addition, the liquid medicine itself is corrosive to a certain extent, which more easily causes damage to the barometric sensor 3. The design of the first waterproof tube 4 in the present solution can exactly avoid a problem of water ingress into the barometric sensor 3 caused by tipping of the liquid medicine tank. Therefore, the barometric liquid level gauge of the present solution has more obvious advantages when applied in the scenario of agricultural liquid medicine tanks.

When initially considering waterproof design for the barometric sensor 3 of the liquid level gauge, the inventor directly thought of arranging a waterproof breathable valve between the barometric sensor 3 and the vent tube 5. The waterproof breathable valve has a function of allowing air to pass through while blocking water, which can exactly meet the requirements of ventilation and waterproofing. However, in actual application, the inventor found that when a breathable membrane in the waterproof breathable valve is wetted, it is necessary to disassemble the entire waterproof breathable valve, dry the breathable membrane, and then reassemble it. The drainage process is relatively complex. More importantly, since the internal breathable membrane cannot be directly seen from outside the waterproof breathable valve, users often cannot determine whether the breathable membrane is wet. During use, it is often necessary to disassemble the waterproof breathable valve to check the breathable membrane, which causes a certain burden to users. Through multiple rounds of experiments and development, the inventor inventively designed the breathable waterproof structure with the first waterproof tube 4 according to the embodiment of the present invention. The first waterproof tube 4 is made of a transparent tube. Before use, users can visually observe whether water has entered the first waterproof tube 4. When water ingress is found, water in the first waterproof tube 4 can be discharged by shaking or flicking the first waterproof tube 4. Compared with the method of waterproofing using a waterproof breathable valve, the first waterproof tube 4 of the present solution is more user-friendly in operation.

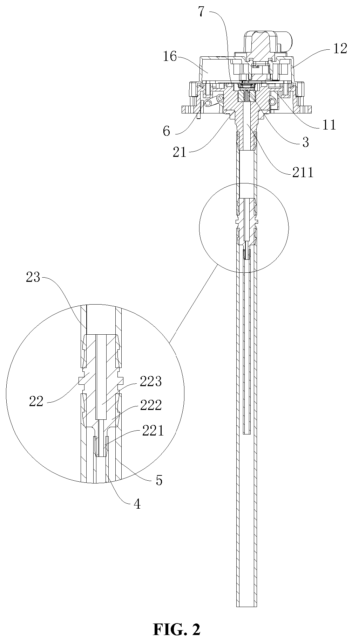

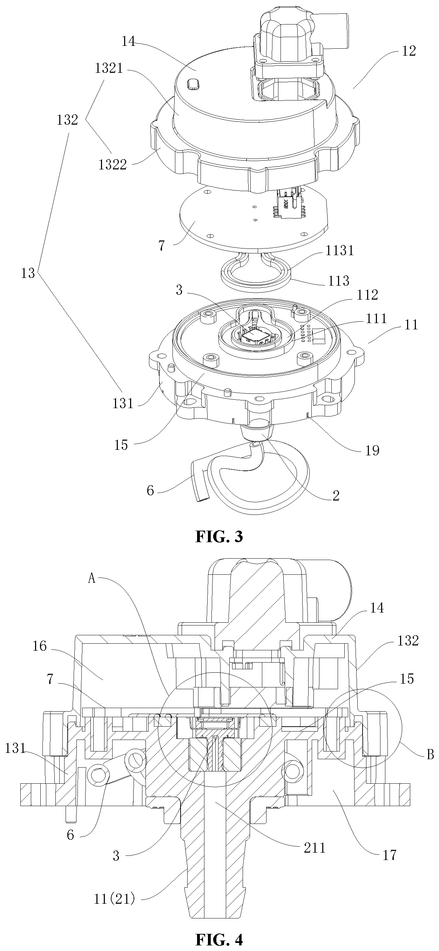

In one embodiment, with reference to FIG. 2 and FIG. 4, the barometric sensor 3 further comprises a connector 2. A first sensing air chamber 211 is arranged inside the connector 2. The barometric sensor 3 comprises a first sensitive element for sensing barometric inside the first sensing air chamber 211. The first waterproof tube 4 is connected to the connector 2 and communicates with the first sensing air chamber 211.

Specifically, the arrangement of the connector 2 can provide mounting support for the barometric sensor 3, and realize a function of indirect connection between the barometric sensor 3 and the first waterproof tube 4. Importantly, a sealed first sensing air chamber 211 can be provided inside the connector 2. The first sensing air chamber 211 is isolated from the outside and communicates with the first waterproof tube 4 and the vent tube 5. Barometric inside the barometric sensor 3 can accurately reflect pressure applied by liquid, thereby achieving a function of accurately detecting liquid level. In summary, the arrangement of the connector 2 provides a reliable bridge for connection between the barometric sensor 3 and the first waterproof tube 4, and effectively ensures air tightness of the connection structure.

In specific implementation, the barometric sensor 3 can be fully or partially mounted into the first sensing air chamber 211. The barometric sensor 3 can also be mounted on an outer surface of the connector 2 (that is, the barometric sensor 3 does not extend into the first sensing air chamber 211), as long as the first sensitive element on the barometric sensor 3 can align facing the first sensing air chamber 211.

In another embodiment, the barometric sensor 3 comprises a sensor main body 31 and a sensor insertion tube 32. The first sensitive element faces a tube cavity of the sensor insertion tube 32. An end of the first waterproof tube 4 is directly sleeved onto the sensor insertion tube 32, so that the first sensitive element can accurately sense barometric inside the first waterproof tube 4.

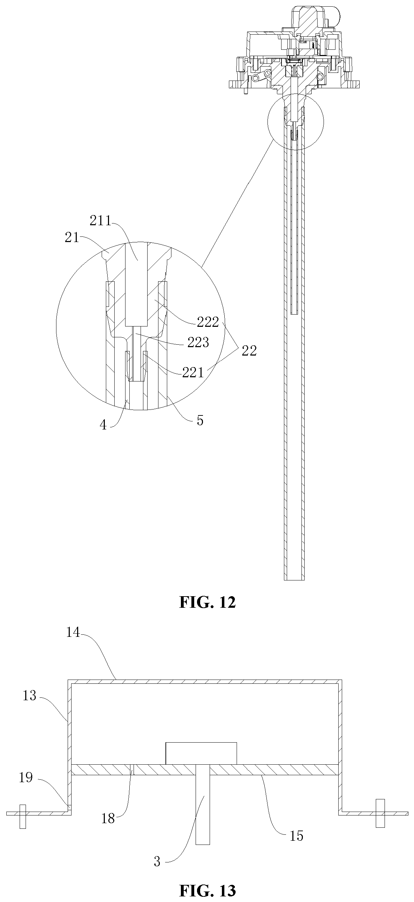

Regarding the connection arrangement between the first waterproof tube 4 and the vent tube 5, in one embodiment, with reference to FIG. 2 or FIG. 12, the connector 2 comprises a connector head 22. The connector head 22 comprises a first connecting post 222 and a second connecting post 221 which are connected. A vent channel 223 is provided inside the connector head 22 and runs through the first connecting post 222 and the second connecting post 221. The vent channel 223 communicates with the first sensing air chamber 211. The first waterproof tube 4 is connected to the second connecting post 221, and the vent tube 5 is sleeved outside the first waterproof tube 4 and connected to the first connecting post 222.

In this embodiment, the first connecting post 222 and the second connecting post 221, which are connected with each other, are arranged on the connector head 22. The two are respectively configured for connecting the vent tube 5 and the first waterproof tube 4. Therefore, a diameter of the first connecting post 222 needs to correspond to the vent tube 5, and a diameter of the second connecting post 221 needs to correspond to the first waterproof tube 4. A key of this structure lies in that it realizes a sleeved structure between the vent tube 5 and the first waterproof tube 4, that is, the first waterproof tube 4 is inserted into the vent tube 5. When the barometric liquid level gauge is inverted, liquid first fills a space between the first waterproof tube 4 and the vent tube 5. Only when a height of the liquid exceeds a height of a free end of the first waterproof tube 4, can the liquid enter the first waterproof tube 4. This exhibits extremely obvious advantages in the application to agricultural liquid medicine tanks. Specifically, after use, the liquid medicine tank usually cannot be completely emptied, and a small amount of liquid medicine remains in the tank. Moreover, the used liquid medicine tank is lightweight and prone to tipping or inverting. When tipping or inverting occurs, the small amount of liquid medicine easily enters through a free end of the vent tube 5. After entering, the small amount of liquid medicine will remain in the space between the first waterproof tube 4 and the vent tube 5, thus avoiding a problem of water ingress into the first waterproof tube 4. Since water does not enter the first waterproof tube 4, the user does not need to disassemble it for drainage during subsequent use, which facilitates user operation.

In one embodiment, the first waterproof tube 4 is sleeved onto the second connecting post 221; and/or, the vent tube 5 is sleeved onto the first connecting post 222.

By adopting a sleeved connection structure, sealing and stability of the connection between the tubes and the connector 2 are further enhanced.

Preferably, both the first connecting post 222 and the second connecting post 221 are arranged as barbed connector heads 22 to improve reliability of the connection.

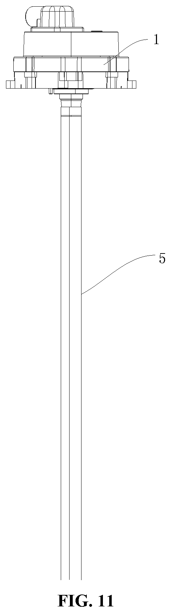

Regarding a structural form of the connector 2, in one embodiment, with reference to FIG. 11-FIG. 12, the connector 2 comprises a mounting base 21 and the connector head 22. The first sensing air chamber 211 is provided in the mounting base 21. The connector head 22 and the mounting base 21 are of an integrated structure.

The mounting base 21 can be specifically configured for mounting the barometric sensor 3, so that the barometric sensor 3 is mounted stably. The first sensing air chamber 211 is arranged in the mounting base 21. After the barometric sensor 3 is mounted, the first sensitive element thereon can align facing the first sensing air chamber 211.

In implementation, the mounting base 21 can also be arranged to be capable of mounting pressure devices (such as the main control circuit board 7, etc.). In addition, the mounting base 21 can also be arranged as a structure capable of mating and connecting with the liquid medicine tank, so that the barometric liquid level gauge of the present embodiment can be reliably mounted onto the liquid medicine tank.

By designing the mounting base 21 and the connector head 22 as an integrated structure, the overall structural strength of the connector 2 is significantly improved. This design can resist greater external force and vibration, thereby ensuring stability and reliability of the connector 2 under harsh working conditions. The design of the integrated structure simplifies the manufacturing process of the connector 2. During manufacturing, processing, and assembling of the mounting base 21 and the connector head 22 can be completed in one step, thereby reducing production cost and improving production efficiency. Since there is no additional connection gap between the mounting base 21 and the connector head 22, a leakage risk caused by poor connection is reduced. This design helps ensure air-tightness inside the connector 2 and ensures accuracy of pressure transmission.

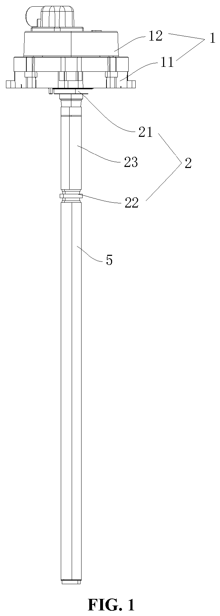

Regarding the structural form of the connector 2, in another embodiment, with reference to FIGS. 1 and 2, the connector 2 comprises a mounting base 21, a flexible tube 23, and the connector head 22. The first sensing air chamber 211 is arranged in the mounting base 21. Two ends of the flexible tube 23 are respectively connected to the mounting base 21 and the connector head 22, so as to communicate the first sensing air chamber 211 and the vent channel 223.

The connector 2 adopts an innovative design comprising the mounting base 21, the flexible tube 23, and the connector head 22. The flexible tube 23, as a key component connecting the mounting base 21 and the connector head 22, not only realizes communication between the first sensing air chamber 211 and the vent channel 223, but also provides the connector 2 with unique maintenance convenience.

The mounting base 21 can be specifically configured for mounting the barometric sensor 3, so that the barometric sensor 3 is mounted stably. The first sensing air chamber 211 is arranged in the mounting base 21. After the barometric sensor 3 is mounted, the first sensitive element thereon can align facing the first sensing air chamber 211. Two ends of the flexible tube 23 are respectively connected to the mounting base 21 and the connector head 22, ensuring smooth communication between the first sensing air chamber 211 and the vent channel 223. This enables barometric to flow unimpeded from the vent tube 5 through the connector head 22 and the flexible tube 23, and finally reach the first sensing air chamber 211 to be accurately sensed by the barometric sensor 3. When water enters the first waterproof tube 4, a conventional connector 2 can require disassembly of multiple components for drainage. In this embodiment, due to the presence of the flexible tube 23, a user can directly squeeze the flexible tube 23 to expel a water column inside the first waterproof tube 4 by using barometric, thereby quickly restoring normal function of the connector 2. This design greatly simplifies the maintenance process and improves user operation convenience.

In one embodiment, the connector head 22 is provided with a third connecting post, and the mounting base 21 is provided with a fourth connecting post. Two ends of the flexible tube 23 are respectively sleeved onto the third connecting post and the fourth connecting post.

By adopting a sleeved connection structure, the sealing and stability of the connection between the flexible tube 23 and the mounting base 21 and the connector head 22 at both ends are further enhanced.

In one embodiment, the first waterproof tube 4 utilizes a principle of water surface tension to form a water column inside the first waterproof tube 4 upon water ingress, so as to prevent external water from further invading the barometric sensor 3 through the first waterproof tube 4.

Specifically, the waterproof function of the first waterproof tube 4 is realized by utilizing the liquid surface tension principle. It only requires the inner tube diameter of the first waterproof tube 4 to be set sufficiently small, so that a water column can form therein when water enters. The first waterproof tube 4 of this structure has the advantages of a simple structure and low cost.

In one embodiment, the inner tube diameter of the first waterproof tube 4 is 1.5-3.5 mm.

By setting the inner tube diameter of the first waterproof tube 4 in a range of 1.5-3.5 mm, normal ventilation requirements can be satisfied, and meanwhile, a water column can be formed inside the first waterproof tube 4 by the action of liquid surface tension to realize the waterproof function.

Preferably, the inner tube diameter of the first waterproof tube 4 is 2.5-2.7 mm. The small size range can ensure a sufficiently stable ventilation function, and also ensure stable water column formation when water enters.

In one embodiment, the inner tube diameter of the vent tube 5 is 5-12 mm.

The inner tube diameter of the vent tube 5 is set in a range of 5-12 mm, which can ensure the response speed of barometric, so that the barometric sensor 3 can sense barometric changes in a timelier manner, thereby improving measurement accuracy and real-time performance.

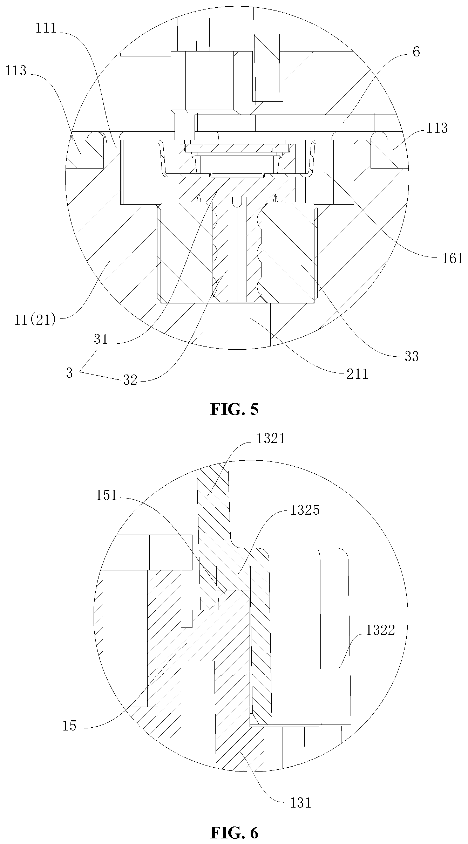

In one embodiment, in combination with FIG. 4 and FIG. 5, the barometric sensor 3 includes a sensor body 31, and the sensor insertion tube 32 is arranged on one side of the sensor body 31. The first sensitive element is arranged inside the sensor insertion tube 32. The connector 2 is provided with a sensing connection hole in communication with the first sensing air chamber 211. The sensor insertion tube 32 is inserted into the sensing connection hole, such that the first sensitive element can sense the internal barometric of the first sensing air chamber 211.

The sensing connection hole specifically designed on the connector 2 serves as a bridge connecting the first sensing air chamber 211 and the sensor insertion tube 32. The sensor insertion tube 32 is connected to the sensing connection hole in an inserting manner. This type of connection is not only simple and fast but also capable of ensuring the sealing and reliability of the connection. After insertion, the first sensitive element can directly face toward the inside of the first sensing air chamber 211 and sense changes in the internal barometric of the first sensing air chamber 211.

In one embodiment, a sealing ring 33 is arranged in the sensing connection hole. The sensor insertion tube 32 is inserted into the sealing ring 33.

The sealing ring 33 is placed in the sensing connection hole. When the sensor insertion tube 32 is inserted, the sealing ring 33 will be tightly compressed between the insertion tube and the connection hole, forming an effective sealing barrier. This sealing function effectively ensures the air tightness inside the first sensing air chamber 211, so that the barometric inside the first sensing air chamber 211 can accurately reflect liquid pressure, thereby ensuring the accuracy of liquid level detection.

In one embodiment, the barometric sensor 3 further includes a second sensitive element for sensing atmospheric pressure.

That is, the barometric sensor 3 is a relative type sensor. When atmospheric pressure changes, it can also achieve the purpose of accurately detecting liquid level height.

In one embodiment, the barometric liquid level gauge includes a shell upper cover 12. The shell upper cover 12 is mounted on the connector 2 and covers the barometric sensor 3.

Specifically, the main function of the shell upper cover 12 is to protect the barometric sensor 3 from external environmental influences. It is mounted on the connector 2 and forms a space, which isolates the barometric sensor 3 from possible dust, moisture, corrosive gases, etc., thereby prolonging the service life of the barometric sensor 3 and improving its measurement accuracy.

In addition, the sealed space between the shell upper cover 12 and the connector 2 can also be configured to mount necessary components such as the main control circuit board 7 in the barometric liquid level gauge, also serving a function of isolation and protection.

On the other hand, the present embodiment also provides a liquid storage device, including a liquid storage tank and the above-mentioned barometric liquid level gauge. The connector 2 of the barometric liquid level gauge is mounted on the top of the liquid storage tank. One end of the vent tube 5 of the barometric liquid level gauge, which is remote from the connector 2, extends to the bottom of the liquid storage tank.

Similarly, the barometric liquid level gauge in the liquid storage device of the present embodiment has the advantage of good waterproof capability.

Furthermore, a plant protection device is provided, including a carrier, a spraying system, and the above-mentioned liquid storage device. The spraying system and the liquid storage device are mounted on the carrier. The spraying system is configured to pump the liquid medicine into the liquid storage device and atomize and spray it.

The carrier can be an unmanned vehicle, an unmanned aerial vehicle, or a manually driven vehicle.

The spraying system includes a pumping device and an atomizer, etc. The tubelines at both ends of the pumping device are respectively connected to the liquid storage tank and the atomizer. The liquid medicine in the liquid storage tank is pumped out by the pumping device, atomized by the atomizer, and evenly sprayed on crops. Based on transportation by the carrier, mobile spraying operations can be realized.

Based on the liquid storage device of the present embodiment, similarly, the barometric liquid level gauge in the plant protection device of the present embodiment has the advantages of strong waterproof performance and long service life.

To ensure detection accuracy, in related technologies, the barometric sensor 3 in the barometric liquid level gauge mounted on the liquid medicine tank is generally a relative type barometric sensor 3. The relative type barometric sensor 3 is provided with at least two pressure detection points. One detection point is used to detect the barometric inside the vent tube, and the other detection point is used to detect atmospheric pressure. The liquid level height can be calculated based on the pressure difference between internal and external pressures, thereby avoiding the problem of liquid level detection accuracy being affected by changes in atmospheric pressure. Since the barometric sensor 3 needs to maintain communication with the atmosphere to detect atmospheric pressure, the barometric sensor 3 cannot be mounted in a completely sealed environment. Usually, it is necessary to arrange a vent hole on the outer shell 1 of the liquid level gauge to maintain communication with the atmosphere. However, in the agricultural plant protection field, the equipment generally works in an outdoor environment. Rainwater, river water, and cleaning water encountered in daily life easily enter the inside of the liquid level gauge through the vent hole, which leads to the problem that the barometric sensor 3 and circuit board inside the liquid level gauge in related technologies are easily damaged by water.

To overcome the above technical problem, with reference to FIG. 4 or FIG. 13, the present embodiment further provides another barometric liquid level gauge, which can effectively prevent external splashing water, such as rainwater and cleaning water, from entering the interior of the barometric liquid level gauge and causing water damage to internal electronic components. It should be noted that the barometric liquid level gauge of the present embodiment can be applied in combination with any one or more of the design points of the barometric liquid level gauges of the above embodiments.

The barometric liquid level gauge of the present embodiment includes an outer shell 1 and a barometric sensor. The outer shell 1 includes a side surrounding wall 13, a top cover plate 14 connected to the side surrounding wall 13, and an inner partition plate 15 connected to the side surrounding wall 13. A device mounting cavity 16 is enclosed and formed between the top cover plate 14 and the inner partition plate 15. A venting chamber 17 is formed on the side of the inner partition plate 15 away from the top cover plate 14. The venting chamber 17 is in communication with the atmosphere, and the inner partition plate 15 is provided with a second vent hole 18 that communicates the device mounting cavity 16 and the venting chamber 17, so that the device mounting cavity 16 can ventilate with the atmosphere. The barometric sensor is mounted in the device mounting cavity 16, and the barometric sensor includes a second sensitive element for sensing the barometric in the device mounting cavity 16.

Specifically, the side surrounding wall 13, the top cover plate 14, and the inner partition plate 15 provided by the outer shell 1 can just enclose to form an independent device mounting cavity 16. The barometric sensor and the required main control circuit board 7, etc., can be mounted inside the device mounting cavity 16, and reliable protection can be provided by the outer shell 1 to realize waterproof and dustproof functions.

In the present solution, the inner partition plate 15 is provided with the second vent hole 18, and the venting chamber 17 below the inner partition plate 15 is arranged to be in communication with the atmosphere, thereby achieving the objective of making the device mounting cavity 16 communicate with the atmosphere, such that the barometric sensor inside the device mounting cavity 16 can normally sense atmospheric pressure.

The barometric liquid level gauge of the present embodiment can be applied in various scenarios that require liquid level detection. Taking the application of the barometric liquid level gauge of the present embodiment in a liquid medicine tank in plant protection as an example, during specific mounting, the outer shell 1 is fixed at the top of the liquid medicine tank, i.e., the bottom edge of the side surrounding wall 13 needs to contact the liquid medicine tank for mounting. At this time, the side surrounding wall 13, the inner partition plate 15, and the liquid medicine tank just enclose to form the above-mentioned venting chamber 17. In order to realize communication between the venting chamber 17 and the atmosphere, holes can be provided on the side surrounding wall 13, or holes or slots can be provided on the liquid medicine tank to communicate with the venting chamber 17.

It can be understood that after the barometric liquid level gauge of the present embodiment is mounted, the inner partition plate 15 is located above the venting chamber 17, i.e., the second vent hole 18 arranged on the inner partition plate 15 is also located above the venting chamber 17. When scenarios such as rainfall or cleaning occur, even if splashing water enters the venting chamber 17 through the side surrounding wall 13 or through the holes or slots provided on the liquid medicine tank that communicate with the venting chamber 17, it is still difficult for water to splash upward within the venting chamber 17 and pass through the second vent hole 18 to enter the device mounting cavity 16.

In summary, based on the barometric liquid level gauge of the present embodiment, the inner partition plate 15 spaced from the top cover plate 14 is arranged within the side surrounding wall 13, so that the device mounting cavity 16 is formed between the top cover plate 14 and the inner partition plate 15, the venting chamber 17 is formed below the inner partition plate 15, and the second vent hole 18 is arranged in the inner partition plate 15. This allows the device mounting cavity 16 to ventilate with the atmosphere through the venting chamber 17, thereby enabling the barometric sensor inside the device mounting cavity 16 to sense atmospheric pressure. When used, in scenarios such as rainfall or splashing of cleaning water, even if a small amount of water splashes into the venting chamber 17, the water does not have enough kinetic energy to splash further upward and pass through the second vent hole 18 to enter the device mounting cavity 16. Therefore, this solution can provide effective splashproof protection for the components mounted in the device mounting cavity 16 (such as the circuit board, barometric sensor 3, etc.), to avoid the problem of internal components being damaged by water.

The barometric liquid level gauge of the present embodiment can be applied in various scenarios requiring liquid level detection, which can include but are not limited to industrial facilities such as reactors and filtration tanks; can include but are not limited to household appliances such as washing machines and dishwashers; and can include but are not limited to plant protection device such as agricultural liquid medicine tanks and water tanks.

The advantage of applying the barometric liquid level gauge of the present embodiment in the scenario of agricultural plant protection liquid medicine tanks is more significant, because liquid medicine tanks are used for outdoor operations, and it is difficult to avoid rain. Moreover, after use, users often need to clean the barometric liquid level gauge. The waterproof structure of the present embodiment can exactly meet the needs of various splashing water scenarios frequently encountered in plant protection liquid medicine tanks.

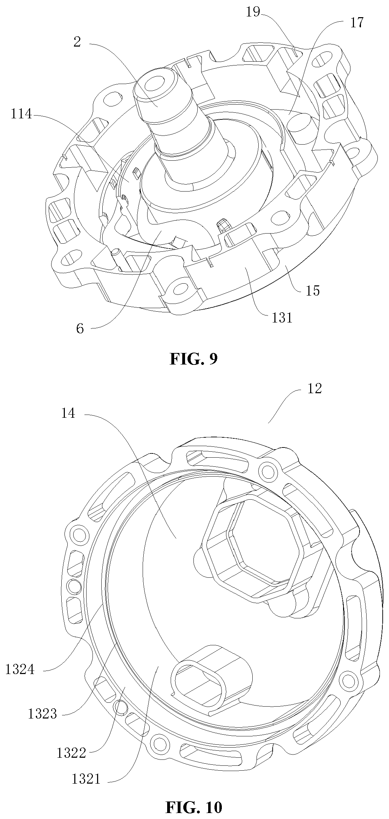

In one embodiment, in combination with FIG. 4 and FIG. 9, a second waterproof tube 6 is arranged inside the venting chamber 17. One end of the second waterproof tube 6 is connected to the second vent hole 18, and the other end is a free end, so that the device mounting cavity 16 is ventilated with the venting chamber 17 through the second waterproof tube 6.

Under normal conditions, the second waterproof tube 6 can connect the device mounting cavity 16 with the venting chamber 17, realizing the communication of the device mounting cavity 16 with the atmosphere. When encountering water, the second waterproof tube 6 can realize effective waterproofing as in the related art. The waterproof principle of the second waterproof tube 6 is similar to that of a capillary tube. When external liquid enters the second waterproof tube 6 from an end of the second waterproof tube 6 far from the device mounting cavity 16, the liquid easily forms a water column inside the second waterproof tube 6 under the action of liquid tension. The water column can isolate a space between the device mounting cavity 16 and the second waterproof tube 6 from the outside, which is equivalent to forming a seal to prevent air between the barometric sensor 3 and the second waterproof tube 6 from being discharged. When pressure of the external liquid balances with barometric inside the second waterproof tube 6, the liquid cannot continue to enter, thereby achieving a waterproof purpose for the barometric sensor 3.

It should be noted that the objective of providing the second waterproof tube 6 in the present embodiment is to provide a safeguard-type waterproof function. During normal use, external splashing water cannot enter the second waterproof tube 6. When immersion occurs, based on the arrangement of the second waterproof tube 6, it can prevent external water from entering the device mounting cavity 16 through the second waterproof tube 6, thus realizing a normal waterproof function even under immersion. The barometric liquid level gauge with the second waterproof tube 6 shows particularly significant advantages when applied in automatic spraying devices mounted on drones, because the barometric liquid level gauge of this solution can realize an effective waterproof function even when the entire barometric liquid level gauge is immersed in water. When the drone carrying the automatic spraying device performs plant protection work and accidentally falls while flying over water, causing the drone and the liquid medicine tank to fall into water, it can still prevent water from entering the interior of the barometric liquid level gauge.

In addition, when the second waterproof tube 6 of the barometric liquid level gauge is blocked by water, it can be restored to use directly by shaking or tapping to expel the water from the second waterproof tube 6.

When the inventor of the present invention initially considered the waterproof design for the barometric sensor 3 of the liquid level gauge, the most straightforward idea was to arrange a waterproof breathable valve at the vent hole of the housing. The waterproof breathable valve has a function of allowing air to pass through while blocking water, which can exactly meet the requirements of ventilation and waterproofing. However, in actual application, the inventor found that when a breathable membrane in the waterproof breathable valve is wetted, it is necessary to disassemble the entire waterproof breathable valve, dry the breathable membrane, and then reassemble it. The drainage process is relatively complex. More importantly, since the internal breathable membrane cannot be directly seen from outside the waterproof breathable valve, users often cannot determine whether the breathable membrane is wet. During use, it is often necessary to disassemble the waterproof breathable valve to check the breathable membrane, which causes a certain burden to users. Through multiple rounds of experiments and development, the inventor of the present invention inventively designed the breathable waterproof structure with the second waterproof tube 6 according to the embodiment of the present invention. The second waterproof tube 6 is made of a transparent tube. Before use, users can visually observe whether water has entered the second waterproof tube 6. When water ingress is found, water in the second waterproof tube 6 can be discharged by shaking or flicking the second waterproof tube 6. Compared with the method of waterproofing using a waterproof breathable valve, the second waterproof tube 6 of the present solution is more user-friendly in operation.

In one embodiment, the second waterproof tube 6 includes a second waterproof tube body and a vent connector that are connected with each other. The vent connector is connected to the second vent hole 18 in an inserted manner.

The second waterproof tube 6 is divided into two parts: the second waterproof tube body and the vent connector, realizing a modular design. This design allows more flexibility in handling different components during production, mounting, and maintenance, thereby improving overall working efficiency and convenience. The vent connector is connected to the second vent hole 18 in an inserted manner. This connection method is not only simple and quick, but also ensures the sealing and stability of the connection. The inserted connection is also convenient for disassembly, maintenance, and replacement when needed, thereby reducing maintenance costs.

In one embodiment, a flexible tube 23 is connected between the second waterproof tube body and the vent connector, and the inner tube diameter of the flexible tube 23 is greater than that of the second waterproof tube body.

The arrangement of the flexible tube 23 provides the second waterproof tube 6 with unique maintenance convenience. Specifically, when the second waterproof tube 6 is filled with water, due to the presence of the flexible tube 23, the user can directly squeeze the flexible tube 23 to utilize barometric to expel the water column from the second waterproof tube 6, thereby quickly restoring the normal function of the barometric liquid level gauge. This design greatly simplifies the maintenance process and improves user operation convenience.

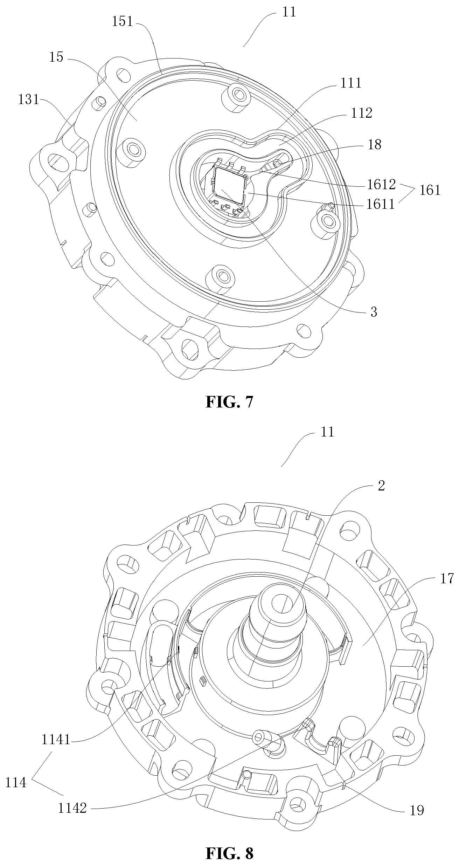

In one embodiment, in combination with FIG. 8 and FIG. 9, the side of the inner partition plate 15 away from the top cover plate 14 is provided with a tube-clamping member 114, and the second waterproof tube 6 is snapped and fixed to the tube-clamping member 114.

The design of the tube-clamping member 114 allows the second waterproof tube 6 to be firmly fixed on the inner partition plate 15, avoiding loosening or detachment due to external factors such as vibration or impact. This stable connection ensures the reliability of the second waterproof tube 6 during long-term use, preventing leakage of water or air caused by an unstable connection.

In one embodiment, the inner partition plate 15 is provided with a connector 2 protruding from the side away from the top cover plate 14 for connecting the vent tube 5, and the second waterproof tube 6 is coiled around the connector 2.

Specifically, the barometric sensor 3 of the present embodiment is a relative-type barometric sensor 3, which at least includes a second sensitive element and a first sensitive element. The second sensitive element is configured to sense atmospheric pressure, and the first sensitive element is configured to sense the pressure of the gas chamber connected to the liquid. In order to enable the second sensitive element and the first sensitive element to perform their respective functions, in the present embodiment, one side of the inner partition plate 15 is provided with a connector 2. The connector 2 is connected with a vent tube 5 that can extend into the liquid. A first sensing air chamber 211 communicating with the vent tube 5 is arranged in the connector 2. After the barometric sensor 3 is fixedly mounted in the device mounting cavity 16, the second sensitive element is exactly located at the device mounting cavity 16, and the first sensitive element is exactly oriented toward the first sensing air chamber 211. Furthermore, after the barometric sensor 3 is mounted, the first sensing air chamber 211 and the device mounting cavity 16 are isolated from each other. As long as the device mounting cavity 16 is in communication with the atmosphere, the second sensitive element can sense atmospheric pressure, and the first sensitive element can sense the barometric on the liquid side. Preferably, referring to FIG. 5, in order to effectively isolate the first sensing air chamber 211 from the device mounting cavity 16, the barometric sensor 3 includes a sensor body 31 and a sensor insertion tube 32. The second sensitive element is located at the side of the sensor body 31, and the first sensitive element is aligned with the tube cavity of the sensor insertion tube 32. A sealing ring 33 is provided at the position where the first sensing air chamber 211 is connected within the device mounting cavity 16. The sensor insertion tube 32 is inserted into the sealing ring 33. In this way, the first sensing air chamber 211 can be effectively isolated from the device mounting cavity 16 based on the mounting of the barometric sensor 3 and the sealing ring 33.

When immersion occurs, external water enters the second waterproof tube 6 and forms a water column in the second waterproof tube 6. The deeper the immersion is, the greater the external water pressure is, and the greater the pressure exerted by the water column on the device mounting cavity 16 is. The formed water column becomes longer, and the compression degree of the gas in the device mounting cavity 16 becomes greater; therefore, the greater the increase in pressure inside the device mounting cavity 16. When the barometric in the device mounting cavity 16 balances with the external water pressure, the water column can no longer continue to extend inward. Thus, the length of the water column that can be formed in the second waterproof tube 6 determines the waterproof capability of the device mounting cavity 16. The longer the water column that can be formed is, the deeper the water in which the device mounting cavity 16 can maintain effective waterproofing is, i.e., the better the deep-water resistance capability is obtained. This solution arranges the second waterproof tube 6 in a coiled shape around the connector 2, which can effectively utilize the limited space in the venting chamber 17 to fully arrange the second waterproof tube 6. Importantly, the coiled second waterproof tube 6 occupies less space and has the advantage of longer length, which is beneficial to obtaining a longer second waterproof tube 6 and thus better deep-water resistance capability.

In one embodiment, in combination with FIG. 8, the tube-clamping member 114 includes an arc-shaped tube-clamping plate 1141. The arc-shaped tube-clamping plate 1141 is arranged on the side of the connector 2 away from the second vent hole 18. A second tube-clamping groove capable of clamping the second waterproof tube 6 is formed between the arc-shaped tube-clamping plate 1141 and the connector 2.

Since the second waterproof tube 6 is generally of cylindrical or tubular structure, the design of the arc-shaped tube-clamping plate 1141 can better adapt to the shape of the second waterproof tube 6. The arc-shaped tube-clamping plate 1141 can closely fit with it, providing uniform clamping force and reducing the problem of blocking ventilation due to bending in the middle of the second waterproof tube 6. Moreover, the arc-shaped tube-clamping plate 1141 can utilize the outer wall of the connector 2 to cooperate in fixing the second waterproof tube 6, thereby achieving the objective of simplifying the structure of the tube-clamping member 114.

In one embodiment, the tube-clamping member 114 includes a clamping block 1142 disposed near the second vent hole 18. The clamping block 1142 is provided with a first tube-clamping groove capable of clamping the second waterproof tube 6.

Specifically, near the position of the second vent hole 18, the second waterproof tube 6 needs to avoid occupying space, so a clamping block 1142 with smaller spatial occupation is provided for fixation. This not only meets the requirement of fixing the second waterproof tube 6, but also avoids the problem of mutual compressing caused by the waterproof tube itself.

In one embodiment, the second waterproof tube 6 utilizes a principle of water surface tension to form a water column inside the second waterproof tube 6 upon water ingress, so as to prevent external water from further invading the barometric sensor 3 through the second waterproof tube 6.

Specifically, the waterproof function of the second waterproof tube 6 is realized by utilizing the liquid surface tension principle. It only requires the inner tube diameter of the second waterproof tube 6 to be set sufficiently small, so that a water column can form therein when water enters. The second waterproof tube 6 of this structure has the advantages of a simple structure and low cost.

In one embodiment, the inner tube diameter of the second waterproof tube 6 is 1.5-3.5 mm.

By setting the inner tube diameter of the second waterproof tube 6 in a range of 1.5-3.5 mm, normal ventilation requirements can be satisfied, and meanwhile, a water column can be formed inside the second waterproof tube 6 by the action of liquid surface tension to realize the waterproof function.

Further preferably, the inner tube diameter of the second waterproof tube 6 is 2.5-2.7 mm. The small size range can ensure a sufficiently stable ventilation function, and also ensure stable water column formation when water enters.

In one embodiment, referring to FIG. 7 and FIG. 8, the side surrounding wall 13 is provided with a first vent hole 19 communicating with the venting chamber 17, so that the venting chamber 17 is in communication with the atmosphere.

By providing the first vent hole 19 on the side surrounding wall 13 to achieve ventilation, it is unnecessary to provide corresponding holes or grooves on the liquid medicine tank where it is mounted. Therefore, the barometric liquid level gauge of the embodiment can be directly applied to the liquid medicine tank of the related art and be used normally without any modification to the liquid medicine tank.

Regarding the structural form of the outer shell 1, in one embodiment, in combination with FIG. 3, FIG. 4, and FIG. 6, the outer shell 1 includes a shell base 11 and a shell upper cover 12. The shell base 11 includes a second surrounding wall plate 131 and the inner partition plate 15 which are connected. The shell upper cover 12 includes a first surrounding wall plate 132 and the top cover plate 14 which are connected. The shell upper cover 12 is snap-fitted onto the shell base 11. The second surrounding wall plate 131 and the first surrounding wall plate 132 are engaged to form the side surrounding wall 13. The first vent hole 19 is provided on the second surrounding wall plate 131.

The outer shell 1 is divided into the shell base 11 and the shell upper cover 12 as two modules. This design allows each part to be manufactured and processed separately, and then assembled later. This modular design not only improves production efficiency but also facilitates subsequent maintenance and replacement. The shell upper cover 12 is snap-fitted onto the shell base 11, and the tight connection between them is ensured by appropriate fixing means (such as snaps, screws, etc.). This assembly method is not only simple and quick but also ensures the sealing and stability of the outer shell 1.

In one embodiment, in combination with FIG. 6 and FIG. 7, the inner partition plate 15 protrudes from the second surrounding wall plate 131 toward the side where the top cover plate 14 is located. The inner cavity of the first surrounding wall plate 132 corresponds to the outer dimension of the inner partition plate 15. The inner partition plate 15 is embedded in the first surrounding wall plate 132.

Since the inner partition plate 15 is embedded into the first surrounding wall plate 132, when the shell upper cover 12 is capped on the shell base 11, the first surrounding wall plate 132 will automatically align with and closely contact the second surrounding wall plate 131. This design simplifies the assembly process, reduces the precision requirement for assembly, and improves production efficiency. The inner partition plate 15 protrudes from the second surrounding wall plate 131 toward the side where the top cover plate 14 is located, and is embedded into the first surrounding wall plate 132, so that during the assembly process, the inner partition plate 15 can serve as a positioning and fixing point between the shell upper cover 12 and the shell base 11, thereby enhancing the overall structural stability of the outer shell 1. Through the tight cooperation between the inner partition plate 15 and the first surrounding wall plate 132, and the contact between the inner partition plate 15 and the second surrounding wall plate 131, a continuous sealing barrier is formed between the venting chamber 17 and the device mounting cavity 16 inside the outer shell 1. This sealing barrier effectively prevents liquid medicine or other impurities from infiltrating internal components, ensuring the normal operation and long-term stability of the barometric liquid level gauge.

In one embodiment, in combination with FIG. 6, the first surrounding wall plate 132 includes a second surrounding wall portion 1321 and a first surrounding wall portion 1322, which are connected in a stepped structure. A step portion 1323 parallel to the inner partition plate 15 is formed between the second surrounding wall portion 1321 and the first surrounding wall portion 1322. A waterproof ring 1325 abutting against the step portion 1323 is mounted on the inner side of the second surrounding wall portion 1321. The inner partition plate 15 is embedded into the second surrounding wall portion 1321 and abuts against the waterproof ring 1325.

The waterproof ring 1325 is mounted inside the second surrounding wall portion 1321. The waterproof ring 1325 closely abuts the step portion 1323. The waterproof ring 1325 is usually made of soft and elastic material, such as rubber or silicone, to ensure a good sealing effect. The inner partition plate 15 is embedded into the second surrounding wall portion 1321 and directly abuts the waterproof ring 1325. This design enables the inner partition plate 15 not only to be firmly supported, but also to form a tight sealing connection with the outer shell 1 through the waterproof ring 1325, effectively preventing liquid or gas from leaking through the gaps of the outer shell 1.

In one embodiment, the step portion 1323 is provided with an annular groove 1324, and the waterproof ring 1325 is mounted in the annular groove 1324 in an embedded manner.

The annular groove 1324 is arranged on the step portion 1323. This design is specially made for mounting the waterproof ring 1325. The shape and size of the annular groove 1324 match the waterproof ring 1325 to ensure that the waterproof ring 1325 can be stably embedded therein. The waterproof ring 1325 is mounted in the annular groove 1324 in an embedded manner. This mounting method not only simplifies the assembly process but also enables a tight contact between the waterproof ring 1325 and the step portion 1323, thereby improving the sealing effect.

In one embodiment, an annular flange 151 is provided on a peripheral portion of the inner partition plate 15, and the annular flange 151 is embedded in the annular groove 1324 to abut against the waterproof ring 1325.

The annular flange 151 is arranged on the peripheral portion of the inner partition plate 15, and the annular flange 151 is embedded into the annular groove 1324 on the step portion 1323 and closely abuts the waterproof ring 1325. This embedded design forms a continuous and tight sealing structure among the inner partition plate 15, the waterproof ring 1325, and the step portion 1323, further enhancing the sealing effect of the waterproof ring 1325 and ensuring the dryness and cleanliness inside the outer shell 1.

Regarding the structural form of the outer shell 1, in another embodiment, referring to FIG. 13, the side surrounding wall 13 and the top cover plate 14 are integrally formed, and the inner partition plate 15 is mounted inside the side surrounding wall 13 in an embedded manner.

This structure can also form the device mounting cavity 16 and the venting chamber 17 above and below the inner partition plate 15, respectively, thereby achieving the waterproof function.

In one embodiment, a mounting boss is provided on the side of the side surrounding wall 13 away from the top cover plate 14, and a mounting hole is formed on the mounting boss.

A mounting boss is provided on the peripheral portion of the side surrounding wall 13, and a mounting hole is formed on the mounting boss, which facilitates the mounting of the barometric liquid level gauge of the present embodiment onto a liquid medicine tank. Specifically, during mounting, threaded holes are formed on the liquid medicine tank. By inserting bolts through the mounting holes and fastening them into the threaded holes, the barometric liquid level gauge can be reliably secured.

On the other hand, a liquid storage device is also provided, including a liquid storage tank and the above-mentioned barometric liquid level gauge. The outer shell 1 of the barometric liquid level gauge is mounted on the top of the liquid storage tank. One end of the vent tube 5 of the barometric liquid level gauge, which is remote from the outer shell 1, extends to the bottom of the liquid storage tank.

Similarly, the barometric liquid level gauge in the liquid storage device of the present embodiment has the advantage of good waterproof capability.

Furthermore, a plant protection device is provided, including a carrier, a spraying system, and the above-mentioned liquid storage device. The spraying system and the liquid storage device are mounted on the carrier. The spraying system is configured to pump the liquid medicine into the liquid storage device and atomize and spray it.

The carrier can be an unmanned vehicle, an unmanned aerial vehicle, or a manually driven vehicle.

The spraying system includes a pumping device and an atomizer, etc. The tubelines at both ends of the pumping device are respectively connected to the liquid storage tank and the atomizer. The liquid medicine in the liquid storage tank is pumped out by the pumping device, atomized by the atomizer, and evenly sprayed on crops. Based on transportation by the carrier, mobile spraying operations can be realized.

Based on the liquid storage device of the present embodiment, similarly, the barometric liquid level gauge in the plant protection device of the present embodiment has the advantages of strong waterproof performance and long service life.

To ensure detection accuracy, the barometric sensor 3 in the barometric liquid level gauge mounted on the liquid medicine tank is generally a relative type barometric sensor 3. The relative type barometric sensor 3 is provided with at least two pressure detection points. One detection point is used to detect the barometric inside the vent tube, and the other detection point is used to detect atmospheric pressure. The liquid level height can be calculated based on the pressure difference between internal and external pressures, thereby avoiding the problem of liquid level detection accuracy being affected by changes in atmospheric pressure. Since the barometric sensor 3 needs to maintain communication with the atmosphere to detect atmospheric pressure, the barometric sensor 3 cannot be mounted in a completely sealed environment. Usually, it is necessary to arrange a vent hole on the outer shell 1 of the liquid level gauge to maintain communication with the atmosphere. However, in the agricultural plant protection field, the equipment generally works in an outdoor environment. Rainwater, river water, and cleaning water encountered in daily life easily enter the inside of the liquid level gauge through the vent hole, which leads to the problem that the barometric sensor 3 and circuit board inside the liquid level gauge in related technologies are easily damaged by water.

To overcome the above technical problem, with reference to FIG. 4, the present embodiment further provides another barometric liquid level gauge, which can effectively prevent external splashing water, such as rainwater and cleaning water, from entering the interior of the barometric liquid level gauge and causing water damage to internal electronic components. It should be noted that the barometric liquid level gauge of the embodiment can be applied in combination with any one or more of the design points of the barometric liquid level gauges of the above embodiments.

The present embodiment provides a barometric liquid level gauge comprising an outer shell 1, a barometric sensor 3, and a second waterproof tube 6. A device mounting cavity 16 is provided inside the outer shell 1, and an independent second sensing air chamber 161 is arranged within the device mounting cavity 16. The outer shell 1 is further provided with a second vent hole 18 communicating with the second sensing air chamber 161. The barometric sensor is mounted within the device mounting cavity 16 and is capable of sensing the internal barometric of the second sensing air chamber 161. One end of the second waterproof tube 6 is connected to the second vent hole 18, and the other end is in communication with atmospheric pressure. The second waterproof tube 6 enables atmospheric communication with the second sensing air chamber 161.

The device mounting cavity 16 is configured for mounting the barometric sensor 3, main control circuit board 7, and other components, and the outer shell 1 provides comprehensive protection. The second sensing air chamber 161 is a portion separated from the device mounting cavity 16, and its volume is necessarily smaller than that of the entire device mounting cavity 16. The barometric sensor 3 is provided with a second sensitive element for sensing the barometric inside the second sensing air chamber 161. When the barometric sensor 3 is mounted, it can be positioned inside or outside the second sensing air chamber 161, as long as the second sensitive element on the barometric sensor 3 is aligned and oriented toward the second sensing air chamber 161.

Under normal conditions, the second waterproof tube 6 allows the second sensing air chamber 161 to be in communication with the external atmosphere, achieving ventilation between the second sensing air chamber 161 and the outside. When encountering water, the second waterproof tube 6 provides effective waterproofing. The waterproof principle of the second waterproof tube 6 is similar to that of a capillary tube. When external liquid enters the second waterproof tube 6 from an end of the second waterproof tube 6 far from the second sensing air chamber 161, the liquid easily forms a water column inside the second waterproof tube 6 under the action of liquid tension. The water column can isolate a space between the device mounting cavity 16 and the second waterproof tube 6 from the outside, which is equivalent to forming a seal to prevent air between the barometric sensor 3 and the second waterproof tube 6 from being discharged. When pressure of the external liquid balances with barometric inside the second waterproof tube 6, the liquid cannot continue to enter, thereby achieving a waterproof purpose for the barometric sensor 3.

In summary, based on the barometric liquid level gauge of the present embodiment, an independent second sensing air chamber 161 is provided inside the device mounting cavity 16 of the barometric liquid level gauge, and a barometric sensor 3 capable of sensing the barometric of the second sensing air chamber 161 is arranged. A second waterproof tube 6 is provided on the outer shell 1 of the barometric liquid level gauge to communicate with the second sensing air chamber 161 inside. The second sensing air chamber 161 communicates with the atmosphere through the second waterproof tube 6, enabling the barometric sensor 3 to sense atmospheric pressure. Since the flow area of the second waterproof tube 6 is small, similar to a capillary tube, when external liquid enters the second waterproof tube 6, the liquid tends to form a water column therein under the effect of surface tension of the liquid. The water column can isolate the second sensing air chamber 161 from the external environment, equivalent to forming a blockage, preventing the air inside the second sensing air chamber 161 from being discharged. Once equilibrium is reached between the external liquid pressure and the internal barometric of the second sensing air chamber 161, the liquid can no longer continue entering, thus achieving waterproofing for the second sensing air chamber 161. Therefore, the barometric liquid level gauge of the present solution can, under normal usage conditions, satisfy the function that the barometric sensor 3 is in communication with atmospheric pressure to detect atmospheric pressure in real time, and can also, when encountering water, effectively isolate from the external environment to achieve effective waterproofing, thereby providing effective protection for the barometric sensor 3 configured for sensing the pressure in the second sensing air chamber 161. In addition, since the second sensing air chamber 161 is provided for communication with atmospheric pressure, the device mounting cavity 16 does not need to provide ventilation and can be completely sealed. Therefore, the problem of water ingress into circuit components such as the main control circuit board 7 in the device mounting cavity 16 can be completely avoided.

Through in-depth research, the inventors found that when an immersion accident occurs, external water enters the second waterproof tube 6 through the first vent hole 19 and forms a water column inside the second waterproof tube 6. The deeper the immersion is, the greater the external water pressure is, and the greater the barometric needed to be provided inside the device mounting cavity 16 to counteract it is, so the water column needs to have a greater degree of compression. It can be understood that the larger the volume of the device mounting cavity 16 is, the more gas needs to be compressed to increase the same pressure. That is, the water column needs to be longer. Generally, a control circuit board and other components also need to be mounted inside the device mounting cavity 16, which leads to the space of the device mounting cavity 16 not being able to be reduced. Therefore, in order to improve the waterproof capability against deep water, extending the second waterproof tube 6 is one of the approaches. However, the space on the outer shell 1 available for arranging the second waterproof tube 6 is limited, and it is generally difficult to arrange a very long second waterproof tube 6 to provide sufficient waterproof performance.

To overcome the above problem, the second sensing air chamber 161 of the present embodiment is a portion separated from the device mounting cavity 16, so its volume is obviously smaller than that of the entire device mounting cavity 16, which means that, when water enters, the water column in the second waterproof tube 6 only needs to compress the air inside the second sensing air chamber 161. Compared with compressing the entire device mounting cavity 16, it is easier to compress the air in the smaller-volume second sensing air chamber 161 to a sufficient pressure. Therefore, based on this improvement, even when a relatively short second waterproof tube 6 is provided, a better waterproof performance against deep water can also be obtained.

Based on the design of the waterproof tube 6, the barometric liquid level gauge of the present embodiment can not only resist conventional splashing water, but also provide waterproof performance against immersion. In other words, even if the barometric liquid level gauge is completely immersed in water, the second sensing air chamber 161 can still be protected from water ingress by utilizing the isolation function of the second waterproof tube 6. The barometric liquid level gauge shows particularly significant advantages when applied in automatic spraying devices mounted on drones, because the barometric liquid level gauge of this solution can realize an effective waterproof function even when the entire barometric liquid level gauge is immersed in water. When the drone carrying the automatic spraying device performs plant protection work and accidentally falls while flying over water, causing the drone and the liquid medicine tank to fall into water, it can still prevent water from entering the interior of the barometric liquid level gauge.

In addition, when the second waterproof tube 6 of the barometric liquid level gauge is blocked by water, it can be restored to use directly by shaking or tapping to expel the water from the second waterproof tube 6.

When the inventor initially considered the waterproof design for the barometric sensor 3 of the liquid level gauge, the most straightforward idea was to arrange a waterproof breathable valve at the vent hole of the housing. The waterproof breathable valve has a function of allowing air to pass through while blocking water, which can exactly meet the requirements of ventilation and waterproofing. However, in actual application, the inventor found that when a breathable membrane in the waterproof breathable valve is wetted, it is necessary to disassemble the entire waterproof breathable valve, dry the breathable membrane, and then reassemble it. The drainage process is relatively complex. More importantly, since the internal breathable membrane cannot be directly seen from outside the waterproof breathable valve, users often cannot determine whether the breathable membrane is wet. During use, it is often necessary to disassemble the waterproof breathable valve to check the breathable membrane, which causes a certain burden to users. Through multiple rounds of experiments and development, the inventor inventively designed the breathable waterproof structure with the second waterproof tube 6 according to the embodiment of the present invention. The second waterproof tube 6 is made of a transparent tube. Before use, users can visually observe whether water has entered the second waterproof tube 6. When water ingress is found, water in the second waterproof tube 6 can be discharged by shaking or flicking the second waterproof tube 6. Compared with the method of waterproofing using a waterproof breathable valve, the second waterproof tube 6 of the present solution is more user-friendly in operation.

In one embodiment, the barometric sensor is mounted inside the second sensing air chamber 161 and includes a second sensitive element for sensing the internal barometric of the second sensing air chamber 161.

Mounting the barometric sensor into the second sensing air chamber 161 makes it more convenient to perform the work of sealing and isolating the second sensing air chamber 161. Moreover, the barometric sensor can occupy most of the space inside the second sensing air chamber 161, so as to achieve the objective of minimizing the air volume of the second sensing air chamber 161 to the greatest extent, which is more conducive to improving the deep-water resistance capability of the present solution.

In one embodiment, with reference to FIGS. 3-4, a main control circuit board 7 is mounted inside the device mounting cavity 16, and the outer shell 1 is provided with an air chamber groove located at one side of the device mounting cavity 16. The main control circuit board 7 is fixed inside the outer shell 1 and covers the air chamber groove to partition the second sensing air chamber 161.

The main control circuit board 7, as one of the core components of the barometric liquid level gauge, not only controls the operation and data processing of the entire device but also serves to partition space in this design. The main control circuit board 7 is mounted inside the device mounting cavity 16, and its position is cleverly arranged to cover the air chamber groove. Thus, the main control circuit board 7 naturally serves as a partition element, dividing the device mounting cavity 16 into two parts: one part is the main control circuit board 7 and its surrounding region, for mounting other necessary electronic components; the other part is the covered air chamber groove, that is, the second sensing air chamber 161. Based on this, an independent second sensing air chamber 161 is partitioned using the existing components of the barometric liquid level gauge without adding extra components or complex structures, achieving the objective of improving deep-water resistance waterproof capability. Therefore, the present solution has the advantages of simple structure and low cost.

In one embodiment, with reference to FIGS. 3-4, the outer shell 1 includes a shell base 11 and a shell upper cover 12. The shell upper cover 12 is covered over the shell base 11 to form the device mounting cavity 16 between the shell base 11 and the shell upper cover 12. The air chamber groove is provided on the shell base 11, and the main control circuit board 7 is fixed on the shell base 11.

The outer shell 1 consists of two parts: the shell base 11 and the shell upper cover 12. The shell base 11 serves as the supporting and fixing structure, on which various electronic components and parts can be mounted; the shell upper cover 12 covers the shell base 11 and is tightly connected to the shell base 11 through sealing connection (such as screws, snaps, or adhesive), thereby forming a relatively enclosed space between the two, i.e., the device mounting cavity 16. The air chamber groove is provided on the shell base 11, enabling the barometric sensor 3 to be mounted on the shell base 11 so that it can be directly aligned with the connector 2 on the shell base 11, achieving the functions of detecting atmospheric pressure and liquid-side pressure by the barometric sensor 3. The main control circuit board 7 is fixedly mounted on the shell base 11, and naturally serves to partition the second sensing air chamber 161 from the device mounting cavity 16.

In one embodiment, an airtight ring 113 is provided between the main control circuit board 7 and the shell base 11, surrounding the air chamber groove.

By introducing the airtight ring 113, the contact surface between the main control circuit board 7 and the shell base 11 is better sealed, thereby improving the airtightness of the second sensing air chamber 161.

In one embodiment, the side of the airtight ring 113 for contacting the main control circuit board 7 is convexly provided with convex rib strips 1131 surrounding the air chamber groove. The convex rib strips 1131 are provided in a number of at least two and arranged at intervals.

The design of the convex rib strips 1131 forms multiple sealing lines. These sealing lines can more effectively block the penetration of moisture and gas, thus achieving the objective of effectively ensuring the airtightness of the second sensing air chamber 161.

In one embodiment, the shell base 11 is provided with a supporting boss 111 surrounding the air chamber groove. The supporting boss 111 is provided with an airtight groove 112, and the airtight ring 113 is embedded in the airtight groove 112 for mounting.

The combined design of the supporting boss 111 and the airtight groove 112 enables the airtight ring 113 to be partially embedded in the airtight groove 112 and supported and fixed by the supporting boss 111, thereby improving the mounting reliability of the airtight ring 113. In addition, it can also make the sealing effect of the airtight ring 113 more prominent.

In one embodiment, the shell base 11 is provided with multiple mounting threaded holes surrounding the air chamber groove. The main control circuit board 7 is provided with positioning holes corresponding to the mounting threaded holes. Mounting screws pass through the positioning holes and are threadedly locked into the mounting threaded holes to press the main control circuit board 7 tightly against the airtight ring 113.

In the mounting process, mounting screws are passed through the positioning holes on the main control circuit board 7 and are threadedly locked into the mounting threaded holes on the shell base 11. As the screws are tightened, the main control circuit board 7 is gradually pressed tightly onto the shell base 11, and the airtight ring 113 is also tightly pressed between the two. This pressing method ensures that a reliable sealing interface is formed between the airtight ring 113 and both the main control circuit board 7 and the shell base 11, effectively preventing the infiltration of moisture and gas. Meanwhile, the structure has the advantage of repeatable disassembly and maintenance.

Preferably, a plurality of circuit board locking platforms are arranged in an array on the shell base 11. The mounting threaded holes are provided in each circuit board locking platform. After the main control circuit board 7 is mounted on the circuit board locking platforms, it can be fixed with mounting screws. In this way, the main control circuit board 7 can be reliably mounted, enabling the main control circuit board 7 to be in close contact with the airtight ring 113.

In one embodiment, the shell base 11 is provided in a protruding manner, on the side away from the shell upper cover 12, with a connector 2 used for connecting the vent tube 5. The second vent hole 18 is arranged on the shell base 11 and avoids the connector 2. The air chamber groove includes a sensor mounting region 1611 and a bypass narrow air duct 1612. The sensor mounting region 1611 is arranged corresponding to the connector 2, and the bypass narrow air duct 1612 communicates with the sensor mounting region 1611 and the second vent hole 18.

Specifically, the barometric sensor 3 of the present embodiment is a relative-type barometric sensor 3, which at least includes a second sensitive element and a first sensitive element. The second sensitive element is configured to sense atmospheric pressure, and the first sensitive element is configured to sense the pressure of the gas chamber connected to the liquid. In order to enable the second sensitive element and the first sensitive element to perform their respective functions, in the present embodiment, one side of the shell base 11 is provided with a connector 2. The connector 2 is connected with a vent tube 5 that can extend into the liquid. A first sensing air chamber 211 communicating with the vent tube 5 is arranged in the connector 2. After the barometric sensor 3 is fixedly mounted in the device mounting cavity 16, the second sensitive element is exactly located at the device mounting cavity 16, and the first sensitive element is exactly oriented toward the first sensing air chamber 211. Furthermore, after the barometric sensor 3 is mounted, the first sensing air chamber 211 and the device mounting cavity 16 are isolated from each other. As long as the device mounting cavity 16 is in communication with the atmosphere, the second sensitive element can sense atmospheric pressure, and the first sensitive element can sense the barometric on the liquid side. Preferably, referring to FIG. 5, in order to effectively isolate the first sensing air chamber 211 from the device mounting cavity 16, the barometric sensor 3 includes a sensor body 31 and a sensor insertion tube 32. The second sensitive element is located at the side of the sensor body 31, and the first sensitive element is aligned with the tube cavity of the sensor insertion tube 32. A sealing ring 33 is provided at the position where the first sensing air chamber 211 is connected within the device mounting cavity 16. The sensor insertion tube 32 is inserted into the sealing ring 33. In this way, the first sensing air chamber 211 can be effectively isolated from the device mounting cavity 16 based on the mounting of the barometric sensor 3 and the sealing ring 33.

By dividing the air chamber groove into the sensor mounting region 1611 and the bypass narrow air duct 1612, the barometric sensor 3 is mounted in the sensor mounting region 1611, so that its sensor insertion tube can directly align with the first sensing air chamber 211 in the connector 2, which facilitates the mounting of the barometric sensor 3. In addition, the bypass narrow air duct 1612 is configured to communicate with the second vent hole 18 and the sensor mounting region 1611, such that the sensor mounting region 1611 can communicate with the second waterproof tube 6, thereby enabling the barometric sensor 3 to sense atmospheric pressure. This structure can both satisfy the ventilation requirement and maximally reduce the volume of the entire second sensing air chamber 161, thereby achieving the objective of enhancing water resistance to deep water.

In another embodiment, the shell base 11 is provided in a protruding manner, on the side away from the shell upper cover 12, with a connector 2 configured for connecting the vent tube 5. The air chamber groove is arranged corresponding to the connector 2. The second vent hole 18 is located at the side of the connector 2 and communicates with the air chamber groove.

In this embodiment, the second vent hole 18 is directly arranged at the side of the connector 2, which allows the second vent hole 18 to directly connect to the air chamber groove inside the connector 2, thereby achieving the shortest connection path and minimizing the volume of the air chamber groove to the greatest extent.

In one embodiment, the shell base 11 is provided, on the side away from the shell upper cover 12, with a venting chamber 17. The second waterproof tube 6 is spirally arranged around the connector 2 in the venting chamber 17.

The venting chamber 17 is provided on the side of the shell base 11 away from the shell upper cover 12 to accommodate the second waterproof tube 6, which enables the second waterproof tube 6 to be hidden and protected. In addition, when immersion occurs, external water enters the second waterproof tube 6 and forms a water column in the second waterproof tube 6. The deeper the immersion is, the greater the external water pressure is, and the greater the pressure exerted by the water column on the device mounting cavity 16 is. The formed water column becomes longer, and the compression degree of the gas in the device mounting cavity 16 becomes greater. Therefore, the greater the increase in pressure inside the device mounting cavity 16 is achieved. When the barometric in the device mounting cavity 16 balances with the external water pressure, the water column can no longer continue to extend inward. Thus, the length of the water column that can be formed in the second waterproof tube 6 determines the waterproof capability of the device mounting cavity 16. The longer the water column that can be formed is, the deeper the water in which the device mounting cavity 16 can maintain effective waterproofing is, i.e., the better the deep-water resistance capability is obtained. This solution arranges the second waterproof tube 6 in a coiled shape around the connector 2, which can effectively utilize the limited space in the venting chamber 17 to fully arrange the second waterproof tube 6. Importantly, the coiled second waterproof tube 6 occupies less space and has the advantage of longer length, which is beneficial to obtaining a longer second waterproof tube 6 and thus better deep-water resistance capability.

In one embodiment, in combination with FIG. 8-FIG. 9, the side of the shell base 11 away from the shell upper cover 12 is provided with a tube-clamping member 114, and the second waterproof tube 6 is snapped and fixed to the tube-clamping member 114.

The design of the tube-clamping member 114 allows the second waterproof tube 6 to be firmly fixed on the inner partition plate 15, avoiding loosening or detachment due to external factors such as vibration or impact. This stable connection ensures the reliability of the second waterproof tube 6 during long-term use, preventing leakage of water or air caused by an unstable connection.

In one embodiment, a first vent hole 19 is provided on the side portion of the shell base 11, and the venting chamber 17 is in communication with the atmosphere through the first vent hole 19.

Specifically, a first vent hole 19 communicating with the atmosphere is provided on the side portion of the shell base 11. It can be understood that after the barometric liquid level gauge of the present embodiment is mounted, the device mounting cavity 16 is located above the venting chamber 17, i.e., the second vent hole 18 is also located above the venting chamber 17. When scenarios such as rainfall or cleaning occur, even if splashing water enters the venting chamber 17 through the side surrounding wall 13 or through the holes or slots provided on the liquid medicine tank that communicate with the venting chamber 17, it is still difficult for water to splash upward within the venting chamber 17 and pass through the second vent hole 18 to enter the device mounting cavity 16.

Thus, the structural design of the shell itself can be used to resist most splashing water to achieve the waterproof object. In most cases, water will not enter the second waterproof tube 6, thereby reducing the number of times the user needs to drain the second waterproof tube 6. The main function of the second waterproof tube 6 in the present embodiment is to provide a safe waterproof function. During normal use, external splashing water cannot enter the second waterproof tube 6. When immersion occurs, based on the arrangement of the second waterproof tube 6, it can prevent external water from entering the device mounting cavity 16 through the second waterproof tube 6, thus realizing a normal waterproof function even under immersion. The barometric liquid level gauge with the second waterproof tube 6 shows particularly significant advantages when applied in automatic spraying devices mounted on drones, because the barometric liquid level gauge of this solution can realize an effective waterproof function even when the entire barometric liquid level gauge is immersed in water. When the drone carrying the automatic spraying device performs plant protection work and accidentally falls while flying over water, causing the drone and the liquid medicine tank to fall into water, it can still prevent water from entering the interior of the barometric liquid level gauge.

In one embodiment, the second waterproof tube 6 utilizes a principle of water surface tension to form a water column inside the second waterproof tube 6 upon water ingress, so as to prevent external water from further invading the barometric sensor 3 through the second waterproof tube 6.

Specifically, the waterproof function of the second waterproof tube 6 is realized by utilizing the liquid surface tension principle. It only requires the inner tube diameter of the second waterproof tube 6 to be set sufficiently small, so that a water column can form therein when water enters. The second waterproof tube 6 of this structure has the advantages of a simple structure and low cost.

In one embodiment, the inner tube diameter of the second waterproof tube 6 is 1.5-3.5 mm.

By setting the inner tube diameter of the second waterproof tube 6 in a range of 1.5-3.5 mm, normal ventilation requirements can be satisfied, and meanwhile, a water column can be formed inside the second waterproof tube 6 by the action of liquid surface tension to realize the waterproof function.

On the other hand, a liquid storage device is also provided, including a liquid storage tank and the above-mentioned barometric liquid level gauge. The outer shell 1 of the barometric liquid level gauge is mounted on the top of the liquid storage tank. One end of the vent tube 5 of the barometric liquid level gauge, which is remote from the outer shell 1, extends to the bottom of the liquid storage tank.

Similarly, the barometric liquid level gauge in the liquid storage device of the present embodiment has the advantage of good waterproof capability.

Furthermore, a plant protection device is provided, including a carrier, a spraying system, and the above-mentioned liquid storage device. The spraying system and the liquid storage device are mounted on the carrier. The spraying system is configured to pump the liquid medicine into the liquid storage device and atomize and spray it.

The carrier can be an unmanned vehicle, an unmanned aerial vehicle, or a manually driven vehicle.

The spraying system includes a pumping device and an atomizer, etc. The tubelines at both ends of the pumping device are respectively connected to the liquid storage tank and the atomizer. The liquid medicine in the liquid storage tank is pumped out by the pumping device, atomized by the atomizer, and evenly sprayed on crops. Based on transportation by the carrier, mobile spraying operations can be realized.

Based on the liquid storage device of the present embodiment, similarly, the barometric liquid level gauge in the plant protection device of the present embodiment has the advantages of strong waterproof performance and long service life.

The directional or positional terms such as "upper", "lower", "left", "right", etc., as used in the present description, are merely intended to facilitate description and simplify operations, rather than to indicate or imply that the referenced devices or components must be constructed or operated in a particular orientation. Therefore, such terms should not be construed as limiting the present invention. In addition, the terms "second", "first", etc., are used solely for distinguishing purposes in the description and do not carry any special meaning.

In the description of the present specification, the reference to the terms "one embodiment", "example", etc., means that the specific features, structures, materials, or characteristics described in connection with the embodiment or example are included in at least one embodiment or example of the present invention. The indicative expressions of the above terms in the present specification do not necessarily refer to the same embodiment or example.

Furthermore, it should be understood that although the present specification is described according to embodiments, not every embodiment includes only one independent technical solution. The manner of such narration in the specification is merely for clarity. A person skilled in the art should treat the specification as a whole, and the technical solutions in various embodiments may also be appropriately combined to form other embodiments understood by those skilled in the art.

The technical principles of the present invention have been described above with reference to specific embodiments. These descriptions are merely intended to explain the principles of the present invention and should not be construed in any way as limiting the scope of protection of the present invention. Based on the explanations herein, a person skilled in the art can conceive of other specific embodiments of the present invention without inventive efforts, and such embodiments shall fall within the scope of protection of the present invention.

## Claims

1. A barometric liquid level gauge, **characterized by** comprising:
a barometric sensor (3);
a first waterproof tube (4) communicating with the barometric sensor (3); and
a vent tube (5), wherein an inner tube diameter of the vent tube (5) is greater than an inner tube diameter of the first waterproof tube (4), one end of the vent tube (5) is communicated with the barometric sensor (3) through the first waterproof tube (4), and the other end of the vent tube (5) is configured to extend into liquid to sense water pressure.

2. The barometric liquid level gauge according to claim 1, further comprising a connector (2), wherein a first sensing air chamber (211) is arranged inside the connector (2), the barometric sensor (3) comprises a first sensitive element for sensing barometric inside the first sensing air chamber (211), and the first waterproof tube (4) is connected to the connector (2) and communicated with the first sensing air chamber (211).

3. The barometric liquid level gauge according to claim 2, wherein the connector (2) comprises a connector head (22), the connector head (22) comprises a first connecting post (222) and a second connecting post (221) which are connected, a vent channel (223) is provided inside the connector head (22) and runs through the first connecting post (222) and the second connecting post (221), and the vent channel (223) is communicated with the first sensing air chamber (211); and the first waterproof tube (4) is connected to the second connecting post (221), and the vent tube (5) is sleeved outside the first waterproof tube (4) and connected to the first connecting post (222).

4. The barometric liquid level gauge according to claim 3, wherein the first waterproof tube (4) is sleeved onto the second connecting post (221); and/or, the vent tube (5) is sleeved onto the first connecting post (222).

5. The barometric liquid level gauge according to claim 3, wherein the connector (2) comprises a mounting base (21) and the connector head (22), the first sensing air chamber (211) is provided in the mounting base (21), and the connector head (22) and the mounting base (21) are of an integrated structure.

6. The barometric liquid level gauge according to any one of claims 2 to 5, wherein the connector (2) comprises a mounting base (21), a flexible tube (23), and the connector head (22), the first sensing air chamber (211) is arranged in the mounting base (21), and two ends of the flexible tube (23) are respectively connected to the mounting base (21) and the connector head (22), so as to communicate the first sensing air chamber (211) and the vent channel (223) in the connector head (22).

7. The barometric liquid level gauge according to claim 6, wherein the connector head (22) is provided with a third connecting post, the mounting base (21) is provided with a fourth connecting post, and two ends of the flexible tube (23) are respectively sleeved onto the third connecting post and the fourth connecting post.

8. The barometric liquid level gauge according to any one of claims 1 to 7, wherein the first waterproof tube (4) utilizes a principle of water surface tension to form a water column inside the first waterproof tube (4) upon water ingress, so as to prevent external water from further invading the barometric sensor (3) through the first waterproof tube (4).

9. The barometric liquid level gauge according to claim 8, wherein the inner tube diameter of the first waterproof tube (4) is 1.5-3.5 mm.

10. The barometric liquid level gauge according to any one of claims 1 to 9, wherein the inner tube diameter of the vent tube (5) is 5-12 mm.

11. The barometric liquid level gauge according to any one of claims 2 to 7, wherein the barometric sensor (3) comprises a sensor body (31), and a sensor insertion tube (32) is arranged on one side of the sensor body (31); the first sensitive element is arranged inside the sensor insertion tube (32); the connector (2) is provided with a sensing connection hole in communication with the first sensing air chamber (211); and the sensor insertion tube (32) is inserted into the sensing connection hole, such that the first sensitive element is able to sense an internal barometric of the first sensing air chamber (211).

12. The barometric liquid level gauge according to claim 11, wherein a sealing ring (33) is arranged in the sensing connection hole, and the sensor insertion tube (32) is inserted into the sealing ring (33).

13. The barometric liquid level gauge according to claim 11, wherein the barometric sensor (3) further comprises a second sensitive element for sensing atmospheric pressure.

14. The barometric liquid level gauge according to claim 11, comprising a shell upper cover (12), wherein the shell upper cover (12) is mounted on the connector (2) and covers the barometric sensor (3).

15. The barometric liquid level gauge according to any one of claims 1 to 14, wherein the barometric liquid level gauge is applied in a liquid medicine tank for plant protection.

16. A liquid storage device, **characterized by** comprising a liquid storage tank and the barometric liquid level gauge according to any one of claims 1 to 15.

17. A plant protection device, **characterized by** comprising a carrier, a spraying system, and the liquid storage device according to claim 16, wherein the spraying system and the liquid storage device are mounted on the carrier, and the spraying system is configured to pump, atomize, and spray a liquid medicine in the liquid storage device.
